Europäisches Patentamt

European Patent Office

Office européen des brevets

(11) Numéro de publication: **0 390 666 B1**

# FASCICULE DE BREVET EUROPEEN

(45) Date de publication de fascicule du brevet: **27.07.94**   (51) Int. Cl.⁵: **G07C 3/00**, G06F 15/74, G08B 25/10, G05B 19/04

(21) Numéro de dépôt: **90400823.2**

(22) Date de dépôt: **27.03.90**

(54) **Système de surveillance d'installations industrielles.**

(30) Priorité: **28.03.89 FR 8903974**

(43) Date de publication de la demande:
**03.10.90 Bulletin 90/40**

(45) Mention de la délivrance du brevet:
**27.07.94 Bulletin 94/30**

(84) Etats contractants désignés:
**BE CH DE ES GB IT LI NL SE**

(56) Documents cités:
| | |
|---|---|
| EP-A- 0 155 773 | WO-A-81/02085 |
| WO-A-85/01582 | GB-A- 2 202 973 |
| US-A- 4 006 461 | US-A- 4 056 684 |
| US-A- 4 086 434 | US-A- 4 423 484 |
| US-A- 4 508 935 | |

**TECHNIOUES CEM, no. 116, mars 1983, Paris, FR, pages 2-8 ; GOGUEL : "Datamatic et la conduite des réseaux".**

(73) Titulaire: **ELF ANTAR FRANCE
Tour Elf
2, Place de la Coupole
La Défense 6
F-92400 Courbevoie(FR)**

(72) Inventeur: **Robin, Jean-François
9, rue de la Monnaie
F-69002 Lyon(FR)**

(74) Mandataire: **Boillot, Marc
Elf Aquitaine Production
Département Propriété Industrielle
Tour Elf
Cédex 45
F-92078 Paris La Défense (FR)**

## Description

La présente invention concerne un système autonome de transmission de mesures et d'états à haute sécurité.

On connait de nombreux systèmes destinés à mesurer, par l'intermédiaire de capteurs, des grandeurs physiques dans un environnement, à mettre ces mesures en forme et à les transmettre en un endroit distinct de l'emplacement des capteurs.

De tels systèmes peuvent faire appel à une transmission des informations par un réseau de câbles prévu spécialement à cet effet ou par des conducteurs placés dans des câbles multifonctions. Une telle solution, très fiable, présente néanmoins l'inconvénient de nécessiter la pose de liaisons fixes ce qui est très onéreux en milieu industriel, particulièrement si l'installation est déjà existante car s'ajoutent aux problèmes habituels de câblages des problèmes d'accès aux installations en marche. Les frais sont encore plus élevés si l'installation des capteurs demande un arrêt des unités.

Pour remédier à l'inconvénient ci-dessus, il est connu d'équiper les dispositifs contenant les capteurs de moyens d'émission par voie hertzienne vers un central de réception à même de concentrer, de mettre en forme et d'utiliser les informations ainsi reçues.

On connaît par le le document EP-A-0 155 773, un système de communication par voie hertzienne entre des satellites constituant des émetteurs locaux et un site central de réception distant.

On connaît également par le brevet américain 4.237.454 du 2 Décembre 1980 un système composé de détecteurs émetteurs regroupant un détecteur de vibrations, une alimentation autonome et un émetteur radio, lesdits ensembles se montant sur des paliers de machines et étant capables de mesurer un niveau de vibration, de détecter le dépassement d'un seuil sur cette mesure et dans un tel cas de transmettre cette information de dépassement vers un central récepteur.

Un tel système est destiné à être installé, en particulier, dans une enceinte industrielle. Or en un tel milieu où de nombreux moteurs électriques sont en service, continu ou non, des parasites de nature électromagnétique peuvent perturber de façon grave les transmissions radioélectriques. Il en résulte un risque important de perte d'information lors de la transmission des données.

En outre, les dispositifs capteurs étant équipés d'alimentations autonomes, il peut arriver que celles-ci s'épuisent trop vite si elles sont du type batteries chimiques ce qui crée des contraintes de maintenance difficilement acceptables ou doivent être dimensionnées trop largement si elles sont du type générateur électromécanique ou solaire.

La présente invention a pour but principal de pallier aux inconvénients ci-dessus.

Il s'agit d'un système de surveillance d'installations industrielles se composant de détecteurs émetteurs et d'une ou plusieurs centrales de réception assurant une grande sécurité de fonctionnement et une autonomie importante.

Ce système de transmission est caractérisé en ce que chaque détecteur émetteur local, autonome en énergie, est normalement en sommeil à l'exception d'une horloge interne toujours en service, ladite horloge mettant périodiquement et séquentiellement sous tension les autres parties du détecteur émetteur, si bien que l'électronique consomme alors une très faible puissance. A intervalles prédéterminés et configurables, ladite horloge met sous tension et séquentiellement les autres parties du détecteur émetteur à savoir :

- Un capteur à même d'acquérir la mesure de la grandeur dont le suivi est requis pour assurer la bonne marche de l'unité industrielle où est installé le système.
- Un ensemble de circuits électroniques effectuant le traitement des mesures ou états reçus du capteur et des tests internes d'alimentation et recueillant des autres modules les informations relatives à des défauts internes de fonctionnement le tout étant mis sous forme numérique codée de façon à rendre lesdites informations aptes à être transmises par radio.
- Un émetteur transmettant, sous conditions, son numéro d'identification, l'état de la mesure capteur et un code de contrôle des données destiné à détecter toute erreur de transmission. Les conditions déclenchant la transmission peuvent être, par exemple, la détection du dépassement d'un seuil sur la mesure, la présence d'une anomalie sur un des modules ou la prise en compte d'un ordre rendant cette émission impérative.

Le système est également caractérisé en ce que la station centrale de réception est constituée d'un concentrateur en état de veille permanente, en attente de réception. Dès réception d'un message en provenance d'un des détecteurs émetteurs, il assure par décodage l'identification de l'émetteur et la prise en compte des données transmises. Il traite les données décodées et contrôle leur intégrité. En cas d'incohérence, il rejette lesdites incohérences, les signale et les prend en mémoire. De façon cyclique, le concentrateur s'assure que tous les détecteurs émetteurs du réseau sont en service en vérifiant qu'ils ont émis au moins une fois dans le cycle et que leur état est normal.

Selon une autre caractéristique de l'invention, les conditions d'émission sont liées à la mesure elle-même. A intervalles fixes, la partie détection du détecteur émetteur est mise sous tension par l'horloge. Si les seuils ou les pas d'évolution préprogrammés ne sont pas franchis, le détecteur émetteur reviendra à l'état de sommeil sans qu'il y ait eu d'émission. La consommation d'énergie est donc très faible tant qu'il n'y a pas d'évolution significative sur le ou les points de mesure surveillés.

Dans le cas de processus industriels très stables, il peut arriver que les conditions d'émission ne soient pas réunies pendant de longues périodes. Le concentrateur ignorerait alors si le détecteur local est encore en état de transmettre les grandeurs qu'il est chargé de surveiller. Selon une caractéristique de l'invention, on assure la fiabilité du système en forçant périodiquement une émission quelles que soient les conditions sur la mesure, par exemple une ou deux fois par jour.

Pour minimiser les risques de collision de messages, en cas d'émission simultanée de deux détecteurs émetteurs, chacun des détecteurs émetteurs locaux effectue deux émissions, l'intervalle de temps séparant les deux émissions étant propre à chaque émetteur. La valeur dudit intervalle est calculée selon un algorithme qui prend en compte le numéro d'identification spécifique à chaque émetteur. De cette façon, les secondes émissions des détecteurs émetteurs en question se trouveront décalées dans le temps.

La présente invention vise encore à permettre la vérification locale du bon fonctionnement des détecteurs émetteurs. Pour ce faire, ces derniers sont équipés d'un dispositif leur permettant de recevoir des commandes externes émises à distance réduite. Le dispositif en question est sollicité à courte distance par l'émission d'un message codé issu d'un appareillage portable et se trouve susceptible ainsi de réveiller le détecteur émetteur. Ce dernier est alors en état de répondre à l'appareillage portable qui fonctionne comme un concentrateur secondaire.

D'autres caractéristiques et avantages de l'invention apparaîtront mieux à la lecture de la description qui fait suite d'un mode particulier de réalisation de l'invention, donné uniquement à titre d'exemple non limitatif, en référence aux dessins annexés sur lesquels :

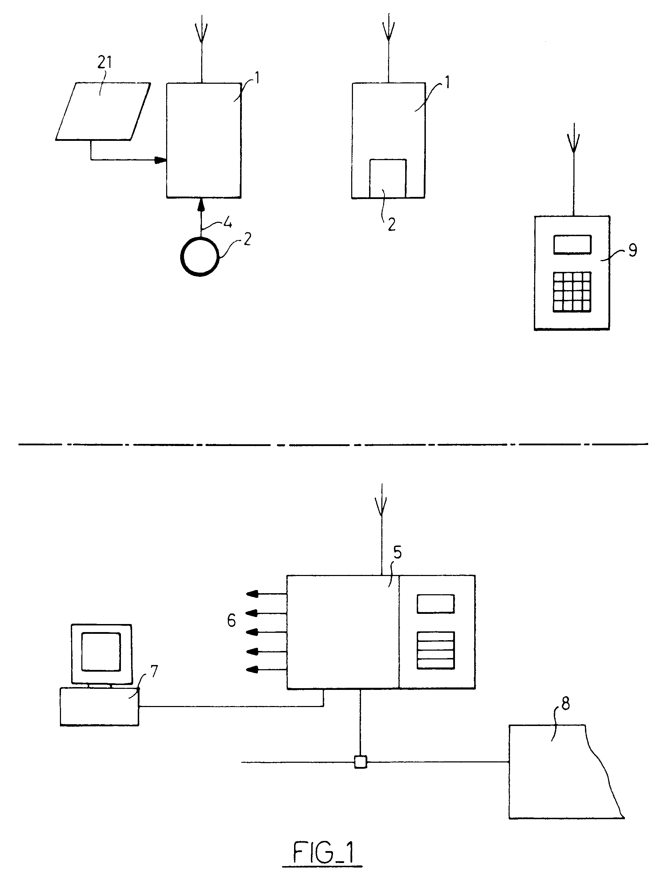

- la figure 1 représente schématiquement un réseau de communication selon l'invention,

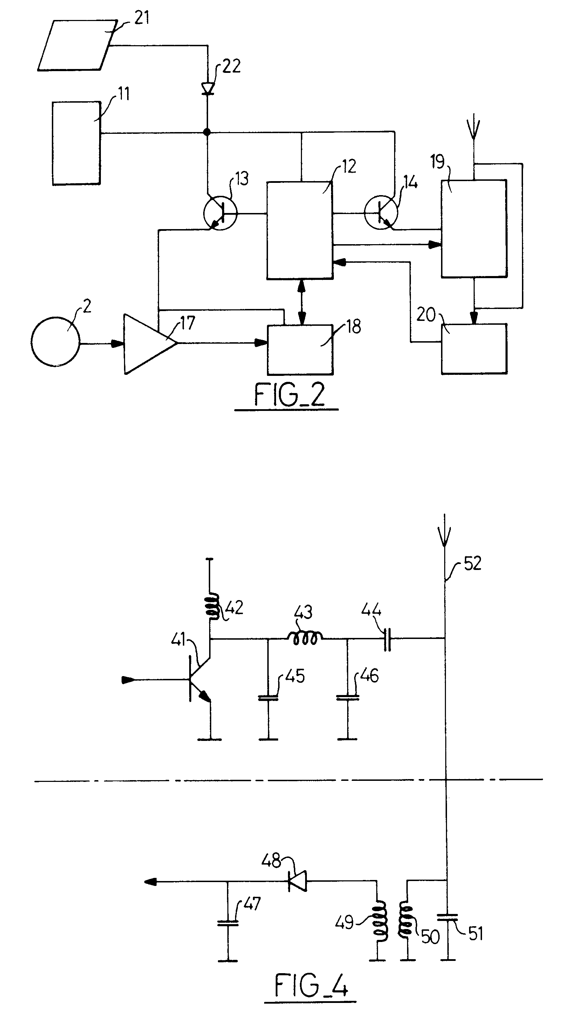

- la figure 2 représente le schéma synoptique d'un dispositif détecteur émetteur dans sa version radio,
- la figure 3 représente le schéma synoptique d'un concentrateur capable de recevoir et d'exploiter les messages provenant des détecteurs émetteurs,
- la figure 4 représente le schéma électronique de principe du système de couplage utilisé dans les détecteurs émetteurs pour dialoguer avec les concentrateurs portables,
- la figure 5 représente la trame émise par les détecteurs émetteurs,
- la figure 6 représente le schéma synoptique d'un concentrateur portable,
- la figure 7 représente un exemple de réalisation d'un détecteur émetteur autonome, alimenté par pile électrochimique,
- la figure 8 représente un exemple de réalisation d'un capteur industriel autonome alimenté par une pile photovoltaïque associée à une batterie secondaire et transmettant par voie radio.

Le réseau de communication selon l'invention se présente conformément au schéma numéro 1. Les détecteurs émetteurs (1) sont associés à des capteurs spécifiques (2) (contacts, pression, température etc...) soit directement par intégration dans le boîtier du détecteur émetteur, soit par l'intermédiaire d'un câble (4) de faible longueur.

Le concentrateur (5) reçoit par voie hertzienne les messages en provenance des détecteurs émetteurs (1). Il traite les données qui y sont incluses et les achemine vers l'extérieur par l'intermédiaire de sorties individuelles (6). Le concentrateur (5) est également connectable à un système de calcul et de traitement (7) et à un système de commande, de contrôle et de supervision (8) via un protocole de communication standard (Modbus par exemple).

Le concentrateur portable (9) permet d'acquérir in situ par une demande de test les paramètres internes de l'un quelconque des détecteurs émetteurs (1). Il est à même également de recueillir toute émission de l'un quelconque de ceux-ci.

L'alimentation électrique des détecteurs émetteurs (1) est assurée soit par une batterie primaire à haute énergie incorporée à l'appareil et dimensionnée de façon telle qu'elle permette une autonomie de deux ans, soit par un couplage d'éléments photovoltaïques (21) et de batteries secondaires intégrées au détecteur émetteur, dimensionnées pour assurer en permanence l'alimentation avec une autonomie d'un mois dans l'obscurité complète.

Le capteur émetteur selon l'invention se présente conformément au schéma numéro 2. L'alimentation est fournie par la pile (11) qui peut être soit une pile électrochimique soit un accumulateur rechargé par un dispositif photovoltaïque (21). Le microcontrôleur (12) assure les fonctions d'horloge, de gestion des alimentations, d'acquisition de la mesure du capteur, le traitement des mesures, la composition de la trame de communication et le pilotage de l'émetteur.

La majeure partie du temps, le microcontrôleur (12) est en sommeil et les transistors (13) et (14) ne sont pas conducteurs, si bien que la consommation de l'ensemble est presque nulle. A intervalle de temps régulier, le microcontrôleur se réveille grâce à son horloge interne et par l'intermédiaire du transistor (13) met sous tension le système de mesure, composé du capteur (2), de l'amplificateur (17), et du convertisseur analogique numérique (18). Après temporisation très courte (de 10 à 100 millisecondes selon le capteur utilisé) nécessaire à la stabilisation du système, le microcontrôleur (12) fait l'acquisition de la mesure par l'intermédiaire du convertisseur analogique numérique (18). Il vérifie en même temps l'état de la pile (11).

Le microcontrôleur coupe ensuite l'alimentation du système de mesure et effectue les traitements nécessaires sur cette mesure (Mise à l'échelle, moyennage, mesure des valeurs de crête ou efficaces, linéarisation, comparaison à des seuils préprogrammés). Selon la logique programmée dans le microcontrôleur, celui ci peut prendre la décision d'émettre le résultat de ses calculs systématiquement ou seulement si un seuil programmé a été dépassé. De toute façon et afin de pouvoir repérer les détecteurs émetteurs qui pourraient présenter des défauts les empêchant d'émettre, la programmation du microcontrôleur est faite de telle façon que quels que soient les résultats de la mesure, il se produise dans un intervalle de temps donné au moins une émission. Cet intervalle est à adapter en fonction des conditions d'utilisation mais peut-être pris égal à douze heures par exemple.

Pour émettre, le microcontrôleur compose la trame puis met le module émetteur (19) sous tension par l'intermédiaire du transistor (14) et pilote l'émetteur en fonction de la trame à émettre. Le microcontrôleur désactive ensuite l'alimentation de l'émetteur et se remet en sommeil pour retrouver son faible niveau de consommation.

Le moment auquel un émetteur va envoyer son message vers le concentrateur central dépend uniquement de conditions internes aux détecteurs émetteurs et il est possible que deux émetteurs se manifestent en même temps auquel cas la réception se trouve perturbée. Pour remédier un tel inconvénient, le microcontrôleur est programmé de telle façon que l'émission soit doublée, l'intervalle de temps entre les deux émissions étant variable selon les détecteurs émetteurs. Pour ce faire, la temporisation Ti entre la fin de la première émission et le début de la seconde émission est prise égale à un temps fonction du numéro d'identification du détecteur émetteur selon l'algorithme

$$Ti = [2(Vi) + 1] \times Te$$

ou Vi est la valeur numérique de l'adresse du détecteur émetteur et Te est la durée d'une émission.

Un nouveau réveil du microcontrôleur se produira à nouveau par son horloge interne ou si une demande de dialogue est transmise par le récepteur simplifié (20). Le récepteur en question est téléalimenté à travers l'antenne lorsqu'un concentrateur portable (9) est placé à proximité. Un dialogue simple conduit à partir de ce concentrateur portable (9), permet d'acquérir la mesure et l'état des piles du capteur transmetteur ou de modifier des paramètres internes tels que période d'émission, seuils de déclenchement, etc...

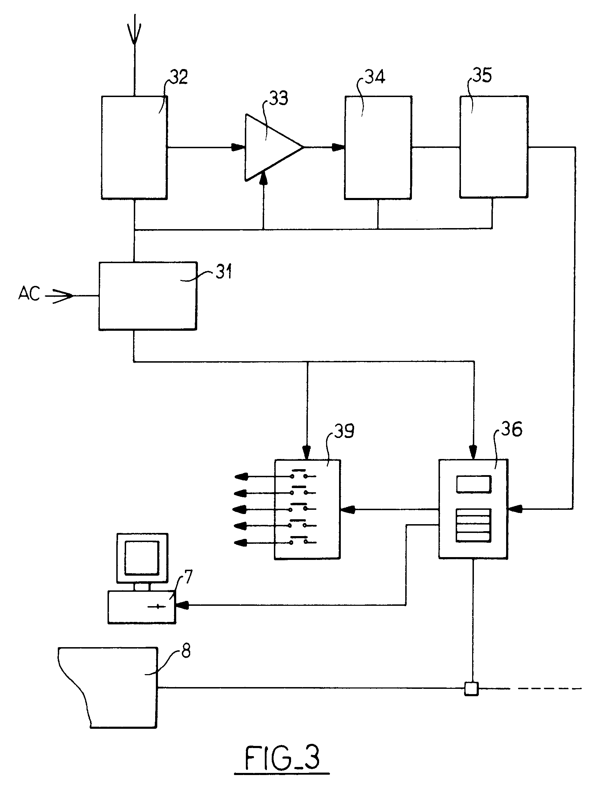

La figure 3 représente le concentrateur fixe généralement placé dans un point central de l'unité telle que le batiment de conduite.

Les messages transmis par les transmetteurs émetteurs sont reçus par un récepteur à haute sensibilité (32) puis sont mis en forme par un comparateur (33), décodés par un microcontrôleur (34) avant d'être transmis à un module d'interface série (35). L'unité (36) permet le traitement et la visualisation des messages. Ceux-ci peuvent être affichés sous forme de mesures ou d'alarmes, directement sur l'unité (36), ou exploités sur un micro-ordinateur (7), ou transmis sur le bus d'un système de supervision (8). Des sorties par contacts secs sont également prévues par l'intermédiaire d'un module (39). Toutes les options peuvent cohabiter sur la même application.

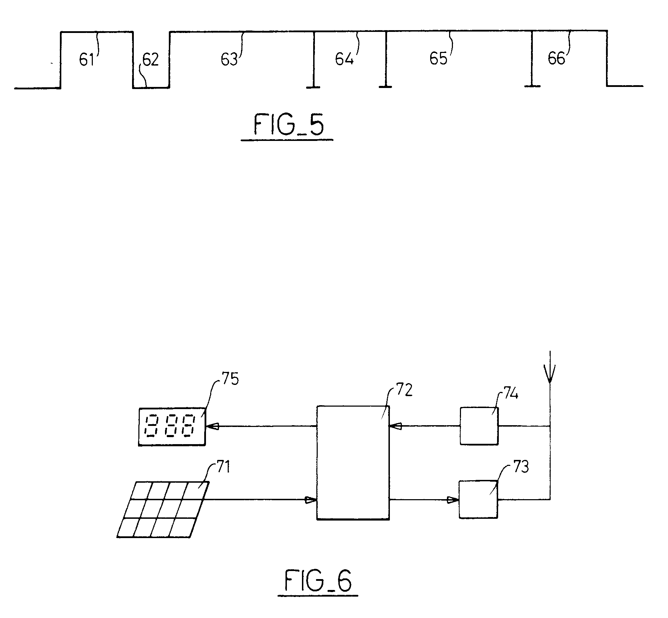

Le dispositif utilisé pour le couplage par l'antenne du concentrateur portable est représenté à la figure 4. La partie supérieure représente l'étage de sortie classique d'un émetteur VHF ou UHF. Le transistor (41) est le transistor de puissance de l'émetteur, alimenté à travers la self de choc (42). L'ensemble (43) (45) (46) constitue un filtre de Collins destiné à adapter l'impédance de sortie de l'émetteur à l'impédance de l'antenne.

La partie inférieure représente le dispositif de réception simplifié capable de recevoir un signal de forte puissance appliqué sur la même antenne que celle utilisée par l'émetteur. Le secondaire du transformateur (49), qui réalise l'adaptation d'impédance, est appliqué à une diode (48) qui réalise avec le condensateur (47) une cellule de détection d'enveloppe de la modulation AM du signal reçu qui est directement appliquée sur une entrée du microcontrôleur pour provoquer son réveil, l'interroger localement ou charger des paramètres.

La trame d'émission des transmetteurs émetteurs est représentée sur la figure 5. On rencontrera successivement une violation du code de transmission (61) obtenue par forçage de l'émission au niveau 1 pendant 30 ms (ce signal permet le réveil du récepteur), le niveau bas (62) de synchronisation avec le récepteur, le champ (63) d'émission du numéro d'identification du détecteur émetteur sur huit bits, le champ (64) signalant les anomalies éventuelles du transmetteur sur quatre bits, le champ (65) donnant la mesure fournie par le capteur sur huit bits, et enfin le champ (66) donnant le code de contrôle sur quatre bits.

Ce code de contrôle est un champ permettant une vérification de la bonne transmission des données. La valeur introduite dans le champ (66) est le reste de la division du polynôme P(x), constitué au moyen des champs de données (63) (64) (65), par un polynôme générateur G(x).

Le champ (66) à quatre bits est donné par R(x) reste de la division P(x)/G(x) avec $G(x) = x^4 + 1$. Au niveau du concentrateur central, le message complet, $P(x) + R(x)$ est divisé par le même polynôme générateur G(x). Tout résultat de division comportant un reste non nul est rejeté.

La figure 6 représente le concentrateur portable. Il utilise le même système de couplage d'antenne que celui des détecteurs émetteurs représentés sur la figure 4. Les commandes entrées par le clavier (71) sont transmises par le microcontrôleur (72) à l'émetteur (73). Les signaux en retour du transmetteur émetteur interrogé, sont reçus sur le récepteur (74) décodés par le microcontrôleur (72) et transcrits sur l'afficheur (75).

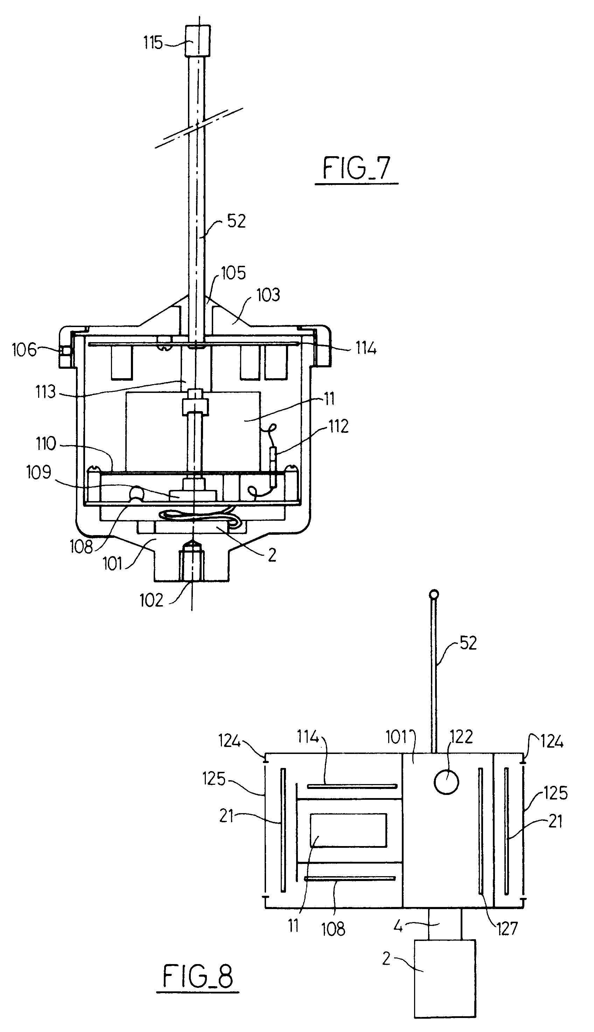

La figure 7 représente un mode de mise en oeuvre de l'invention conforme aux figures ci-dessus. Le corps (101) du détecteur émetteur est réalisé en aluminium coulé. Le fond du corps est muni d'un alésage fileté (102) permettant la fixation du détecteur émetteur sur le point de mesure. Le corps est fermé par un couvercle en aluminium coulé (103) muni d'un filetage, percé en son centre pour permettre le passage de l'antenne (52) au travers d'un adaptateur isolant (105). Cette antenne est équipée d'un embout (115). Une vis pointeau (106) permet de bloquer le couvercle (103) en position fermée. A l'intérieur de l'enceinte, sont disposés, de bas en haut, un capteur (2), un microcircuit (108) sur lequel figureront, entre autres, huit interrupteurs de programmation du numéro d'identification de l'appareil (109). Sur une platine (110) sont montées les piles (11) reliées au microcircuit par un connecteur (112). Par l'intermédiaire d'une connexion souple (113) on relie le microcircuit (108) à un circuit imprimé (114) portant l'émetteur, l'antenne (52) étant reliée directement à ce circuit imprimé (114).

La figure 8 représente une variante de réalisation dans laquelle l'alimentation autonome est assurée par un capteur photovoltaïque et où la cellule de mesure équipée du capteur se trouve physiquement séparée du détecteur émetteur proprement dit. Le boîtier (101) en aluminium coulé, de forme cylindrique, équipé de son antenne (52) est muni à ses deux extrémités de vitres (124) derrière lesquelles on trouve des cellules photovoltaïques (21). Ces cellules chargent une batterie tampon (11) qui à son tour assure l'alimentation de l'appareillage.

On trouve également, à l'intérieur du corps (101) la carte microcontrôleur (108) et la carte émetteur (114). La cellule de mesure (2) reliée au détecteur émetteur par des conducteurs (4) est contrôlée par une carte électronique (127).

Bien entendu, diverses modifications et adjonctions peuvent être apportées par l'homme de l'art aux dispositifs qui viennent d'être décrits, uniquement à titre d'exemple non limitatif, sans sortir du cadre de protection défini par les revendications annexées.

## Revendications

1. Système de surveillance d'installations industrielles composé de détecteurs émetteurs locaux autonomes (1) et d'une station centrale de réception caractérisé en ce que chaque détecteur émetteur local, autonome en énergie, est normalement en sommeil à l'exception d'une horloge interne toujours en service, ladite horloge mettant périodiquement et séquentiellement sous tension les autres parties du détecteur émetteur.

2. Système selon la revendication 1 caractérisé en ce que chaque détecteur émetteur se compose, en plus de son horloge interne, d'un capteur (2) acquérant les données nécessaires au suivi de la marche de l'unité industrielle, de circuits électroniques de traitement des informations reçues du capteur et de celles relatives aux défauts de fonctionnement des modules de chaque détecteur émetteur et d'un émetteur transmettant, sous conditions, son numéro d'identification, le diagnostic de bon fonctionnement, l'état de la mesure et un code de contrôle des données à transmettre.

3. Système selon la revendication 2 caractérisé en ce que l'alimentation autonome des détecteurs émetteurs est assurée par des piles (11).

4. Système selon la revendication 2 caractérisé en ce que l'alimentation autonome des détecteurs émetteurs est assurée par un réseau de photo-piles au silicium (21) associé à une batterie secondaire (11).

5. Système selon l'une des revendications 2 à 4 caractérisé en ce que chaque fois que les conditions d'émission seront remplies, on doublera l'émission initiale par une seconde de contenu identique, les deux émissions étant séparées par un intervalle de temps calculé pour chaque émetteur selon un algorithme prenant en compte son numéro d'identification spécifique.

6. Système selon la revendication 5 caractérisé en ce que l'algorithme est de la forme : intervalle de temps entre les deux émissions = temps de l'émission initiale multiplié par un coefficient égal à deux fois le numéro d'identification de l'émetteur plus un.

7. Système selon l'une des revendications 2 à 6 caractérisé en ce que la station centrale de réception est constituée d'un concentrateur (5) en état de veille permanente qui assure par décodage, d'une part, l'identification de l'émetteur et la prise en compte des données transmises et par traitement le contrôle de la cohérence des informations reçues avec, s'il y a lieu, rejet, prise en mémoire et signalisation des dites incohérences et, d'autre part, le contrôle périodique du bon fonctionnement des émetteurs en vérifiant qu'ils ont émis au moins une fois dans une période de temps prédéterminée et que leur état est normal.

8. Système selon la revendication 7 caractérisé en ce que les émissions d'informations vers le concentrateur central ont lieu si la ou les grandeurs mesurées ont franchi les seuils ou les pas programmés ou si des défauts ont été détectés sur les organes composant le système.

9. Système selon la revendication 8 caractérisé en ce qu'à intervalles de temps programmés, on force chaque détecteur à émettre même si les conditions d'émission ne sont pas remplies.

10. Système selon l'une des revendication 7 à 9 caractérisé en ce que l'on calcule au niveau du détecteur émetteur le code de contrôle (66) sur le numéro d'identification du détecteur émetteur (63), les anomalies du système (64) et la mesure fournie par le capteur (65), que l'on transmet le tout vers le concentrateur (5), que l'on recalcule au niveau du dit concentrateur la valeur (66) avec les données (63), (64), (65) transmises et que l'on compare les deux valeurs, l'identité entre ces deux valeurs calculée et transmise indiquant une bonne transmission.

11. Système selon l'une des revendications 2à 10 caractérisé en ce qu'un concentrateur portable annexe permet de recevoir les informations émises par les détecteurs émetteurs, de forcer l'émission d'un détecteur émetteur et de modifier individuellement les paramètres de fonctionnement des détecteurs émetteurs.

## Claims

1. System for monitoring industrial installations and consisting of autonomous local transmitter detectors (1) and a central receiving station, characterised in that each local transmitter detector, having its own power supply, is normally at rest with the exception of an internal clock which is always in service, said clock periodically and sequentially switching on the other parts of the transmitter detector.

2. System according to Claim 1, characterised in that, in addition to its internal clock, each transmitter detector consists of a sensor (2) acquiring the data necessary for monitoring the operation of the industrial unit, of electronic circuits for processing the information received from the sensor and the information relating to the operating defects of the modules of each transmitter detector, and of a transmitter which, conditionally, transmits its identification number, the diagnosis for correct operation, the measuring state and a code for controlling the data to be transmitted.

3. System according to Claim 2, characterised in that the autonomous power supply of the transmitter detectors is provided by cells (11).

4. System according to Claim 2, characterised in that the autonomous power supply of the transmitter detectors is provided by a network of silicon photo cells (21) associated with a second battery (11).

5. System according to any one of Claims 2 to 4, characterised in that whenever the transmission conditions are satisfied, the initial transmission is duplicated by a second transmission having an identical content, the two transmissions being separated by a time interval calculated for each transmitter according to an algorithm taking account of its specific identification number.

6. System according to Claim 5, characterised in that the algorithm is of the form: time interval between the two transmissions = initial transmission time multiplied by a coefficient equal to twice the identification number of the transmitter plus one.

7. System according to any one of Claims 2 to 6, characterised in that the central receiving station consists of a concentrator (5) in a permanent waiting state which, by decoding, firstly identifies the transmitter and takes account of the data transmitted and, by processing, controls the coherence of the information received and, if necessary, rejects, stores and signals these incoherences and, secondly, periodically controls the correct operation of the transmitters by checking that they have transmitted at least once in a predetermined period of time and that their state is normal.

8. System according to Claim 7, characterised in that the transmission of information to the central concentrator is performed if the size(s) measured has (have) passed the programmed threshold(s) or step(s) or if defects have been detected in the units constituting the system.

9. System according to Claim 8, characterised in that each detector is forced to transmit at programmed time intervals even if the transmission conditions are not satisfied.

10. System according to any one of Claims 7 to 9, characterised in that the control code (66) on the identification number of the transmitter detector (63), the anomalies of the system (64) and the measurement provided by the sensor (65) are calculated at the transmitter detector; in that the above are all transmitted to the concentrator (5); in that the value (66) is recalculated at said concentrator with the data (63, 64, 65) transmitted; and that the two values are compared, the sameness between these two values calculated and transmitted indicating good transmission.

11. System according to any one of Claims 2 to 10, characterised in that the auxiliary portable concentrator enables information emitted by the transmitter detectors to be received, the emission of a transmitter detector to be forced, and the operating parameters of the transmitter detectors to be modified individually.

**Patentansprüche**

1. Anordnung zur Überwachung von Industrieanlagen, bestehend aus örtlichen autonomen Sende/Empfangs-Einrichtungen (1) und einer zentralen Empfangsstation, dadurch gekennzeichnet, daß jede örtliche Sende/Empfangs-Einrichtung, die sich selbst mit Energie versorgt, normalerweise in Ruhestellung ist, mit Ausnahme einer immer arbeitenden internen Zeituhr, die in regelmäßigen Zeitabständen und nacheinander die anderen Teile der Sende/Empfangs-Einrichtung mit Spannung versorgt.

2. Anordnung nach Anspruch 1, dadurch gekennzeichnet, daß jede Sende/Empfangs-Einrichtung außer seiner internen Zeituhr aus folgenden Bestandteilen besteht: aus einem Meßglied (2), das die für den Betrieb der Produktionsanlage notwendigen Daten erfaßt, aus elektronischen Schaltungen zur Verarbeitung der vom Meßglied zugeleiteten Informationen und von solchen Informationen, die die Funktionsstörungen der Bauteile einer jeden Sende/Empfangs-Einrichtung zugeordnet sind, und aus einem Sender, der je nach Bedarf seine Identifikationsnummer, die Fehlerfreiheitsdiagnose, den Zustand des Meßinstruments und einen Kontrollcode für die zu übermittelnden Daten überträgt.

3. Anordnung nach Anspruch 2, dadurch gekennzeichnet, daß die Selbtsversorgung der Sende/Empfangs-Einrichtungen durch Batterien (11) gewährleistet ist.

4. Anordnung nach Anspruch 2, dadurch gekennzeichnet, daß die Sebstversorgung der Sende/Empfangs-Einrichtungen durch Silizium-Photo-Akkumulatoren (21) in Zusammenwirkung mit einer Sekundärbatterie gewährleistet ist.

5. Anordnung nach einem der Ansprüche 2 bis 4, dadurch gekennzeichnet, daß immer dann, wenn die Sendebedingungen gegeben sind, die ursprüngliche Sendung von einer zweiten identischen gefolgt wird, wobei die Sendungen durch ein Zeitintervall getrennt sind, das für jeden Sender nach einem Algorithmus unter Berücksichtigung seiner spezifischen Identifikationsnummer berechnet wird.

6. Anordnung nach Anspruch 5, dadurch gekennzeichnet, daß der Algorithmus der folgende ist: Zeitintervall zwischen den beiden Sendungen = Zeit der ursprünglichen Sendung multipliziert mit einem Koeffizienten, der zweimal der Identifikationsnummer des Senders plus eins entspricht.

7. Anordnung nach einem der Ansprüche 2 bis 6, dadurch gekennzeichnet, daß die zentrale Empfangsstation aus einem Konzentrator (5), der immer in Bereitschaftsstellung ist, besteht, der durch Dekodierung zum einen die Identifizierung des Senders und die Berücksichtigung der übertragenen Daten sicherstellt, und durch Verarbeitung die Kontrolle der Übereinstimmung der empfangenen Informationen mit, wenn sie stattfinden, der Verwerfung, der Speicherung und der Anzeige der Unstimmigkeiten, und zum anderen die periodische Kontrolle der störungsfreien Funktion der Sender, indem überprüft wird, daß sie in einem vorbestimmten Zeitraum mindestens einmal gesendet haben, und daß ihr Zustand normal ist.

8. Anordnung nach Anspruch 7, dadurch gekennzeichnet, daß die Informationssendungen zum zentralen Konzentrator dann stattfinden, wenn die gemessene(n) Größe(n) den die programmierten Schwellenwerte oder Schritte überschritten hat/haben, oder wenn Störungen in den Organen der Anordnung festgestellt wurden.

9. Anordnung nach Anspruch 8, dadurch gekennzeichnet, daß die Sender nach programmierten Zeitintervallen senden, auch wenn die Sendebedingungen nicht erfüllt sind.

10. Anordnung nach einem der Ansprüche 7 bis 9, dadurch gekennzeichnet, daß der Kontrollcode (66) auf der Ebene der Sende/Empfangs-Einrichtung aufgrund der Identifikationsnummer in der Sende/Empfangs-Einrichtung (63), der Störungen im System (64) und dem vom Meßglied gelieferten Wert (65) ermittelt wird, daß dies alles dem Konzentrator (5) weitergeleitet wird, daß auf der Ebene des Konzentrators der Wert (66) mit den übertragenen Daten (63), (64), (65) ermittelt wird und daß die beiden Werte verglichen werden, wobei die Identität der beiden errechneten und übertragenen Werte eine störungsfreie Sendung anzeigt.

11. Anordnung nach einem der Ansprüche 2 bis 10, dadurch gekennzeichnet, daß ein tragbarer Zusatzkonzentrator es erlaubt, die von den Sendern gesendeten Informationen zu empfangen, die Sendung von einer Sende/Empfangs-Einrichtung zu erzwingen und die Funktionsparameter der Sende/Empfangs-Einrichtungen individuell zu ändern.

FIG_1

FIG_2

FIG_4

FIG_3

FIG_5

FIG_6

FIG_7

FIG_8

13